# EUROPEAN PATENT APPLICATION

(11) **EP 4 319 380 A1**
(43) Date of publication of application: **07.02.2024**
(21) Application number: 21934979.2
(22) Date of filing: 31.03.2021
(51) Int. Cl.: H04W 72/04

(54) **WIRELESS BASE STATION AND USER EQUIPMENT**

(71) Applicant: NTT DOCOMO, INC., Tokyo 100-6150 (JP)
(72) Inventor: MIN Tianyang, Tokyo 100-6150 (JP); HANAKI Akihito, Tokyo 100-6150 (JP); YOSHIOKA Shohei, Tokyo 100-6150 (JP)
(74) Representative: Hoffmann Eitle
(86) International application number: PCT/JP2021/014058
(87) International publication number: WO 2022/208817

(57) **Abstract**

A network configures different values for a secondary cell identifier assigned to a secondary cell, and a serving cell identifier assigned to a primary secondary cell, the primary secondary cell being a primary cell in a plurality of the secondary cells included in the same cell group, and transmits configuration information including the secondary cell identifier and the serving cell identifier to a terminal.

## Description

### Technical Field

The present disclosure relates to a radio base station and a terminal that support carrier aggregation.

### Background Art

The 3rd Generation Partnership Project (3GPP) has prepared a specification for the 5th generation mobile communication system (also referred to as 5G, New Radio (NR), or Next Generation (NG)), and further a specification for a next-generation system referred to as Beyond 5G, 5G Evolution, or 6G is also being prepared.

3GPP Release 15 (NR) specifies that when carrier aggregation (CA) is performed, a terminal (User Equipment, UE) multiplexes Uplink Control Information (UCI) to a Physical Uplink Shared Channel (PUSCH) transmitted via a serving cell to which a serving cell identifier (servCellIndex) with the smallest value is assigned (Non-Patent Literature 1).

It is specified that a secondary cell (SCell) is configured based on a secondary cell identifier (SCellIndex), and that a primary secondary cell (PSCell), which is a primary cell in a plurality of secondary cells, is configured based on the serving cell identifier (servCellIndex) (Non-Patent Literature 2).

Further, it is also specified that the SCellIndex assigned to the SCell is also applied to the servCellIndex of the SCell.

### Citation List

### Non-Patent Literature

Non-Patent Literature 1: 3GPP TS 38.213 V15.12.0, 3rd Generation Partnership Project; Technical Specification Group Radio Access Network; NR; Physical layer procedures for control (Release 15), 3GPP, December 2020
Non-Patent Literature 2: 3GPP TS 38.331 V15.12.0, 3rd Generation Partnership Project; Technical Specification Group Radio Access Network; NR; Radio Resource Control (RRC) protocol specification (Release 15), 3GPP, December 2020

### Summary of the Invention

A UE multiplexes UCI to a PUSCH of a serving cell to which a servCellIndex with the smallest value is assigned, but a servCellIndex assigned to a PSCell may overlap with a SCellIndex assigned to a SCell.

Therefore, if the servCellIndex assigned to the PSCell and the SCellIndex assigned to the SCell overlap, the UE is not able to determine whether the UCI should be multiplexed to a PUSCH of the PSCell or a PUSCH of the SCell.

Therefore, the following disclosure has been made in view of this kind of situation, and an object of the disclosure is to provide a radio base station and a terminal that can realize multiplexing of uplink control information to an appropriate physical uplink shared channel in a cell group.

One aspect of the present disclosure provides a radio base station (gNB 100) including: a control unit (control unit 140) that configures different values for a secondary cell identifier assigned to a secondary cell, and a serving cell identifier assigned to a primary secondary cell, the primary secondary cell being a primary cell in a plurality of the secondary cells included in the same cell group; and a transmission unit (RRC processing unit 120) that transmits configuration information including the secondary cell identifier and the serving cell identifier to a terminal.

One aspect of the present disclosure provides a terminal (UE 200) including: a receiving unit (RRC processing unit 220) that receives configuration information including a secondary cell identifier assigned to a secondary cell, and a serving cell identifier assigned to a primary secondary cell, the primary secondary cell being a primary cell in a plurality of the secondary cells included in the same cell group; and a control unit (control unit 240) that multiplexes uplink control information to a physical uplink shared channel transmitted via the primary secondary cell, if the secondary cell identifier and the serving cell identifier overlap.

### Brief Description of Drawings

[Fig. 1] Fig. 1 is an overall schematic configuration diagram of a radio communication system 10.
[Fig. 2] Fig. 2 is a functional block diagram of a gNB 100.
[Fig. 3] Fig. 3 is a functional block diagram of a UE 200.
[Fig. 4] Fig. 4 is a diagram showing an example in which a SCellIndex assigned to a SCell and a servCellIndex assigned to a PSCell overlap.
[Fig. 5] Fig. 5 is a diagram showing an example of a communication sequence between the UE 200 and a network in Operation Example 1.
[Fig. 6] Fig. 6 is a diagram showing an operation flow for the UE 200 to multiplex UCI to a PUSCH in Operation Example 2.
[Fig. 7] Fig. 7 is a diagram showing an example of the hardware configuration of the gNB 100 and UE 200.

### Description of Embodiments

Embodiments will be explained below with reference to the accompanying drawings. Note that the same or similar reference numerals have been attached to the same functions and configurations, and the description thereof is omitted as appropriate.

### (1) Overall schematic configuration of radio communication system

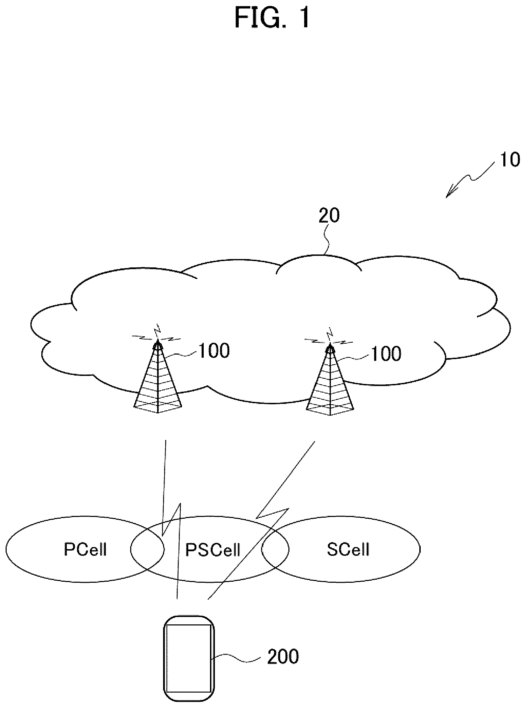

Fig. 1 is an overall schematic configuration diagram of a radio communication system 10 according to the present embodiment. The radio communication system 10 is compliant with 5G New Radio (NR) and includes a Next Generation-Radio Access Network 20 (hereinafter referred to as an NG-RAN 20, and a terminal 200 (User Equipment 200, hereinafter referred to as a UE 200).

The radio communication system 10 may be compliant with a method referred to as Beyond 5G, 5G Evolution, or 6G.

The NG-RAN 20 includes a radio base station 100 (hereinafter referred to as a gNB 100). The specific configuration of the radio communication system 10 including the number of gNBs and UEs is not limited to the example shown in Fig. 1.

The NG-RAN 20 actually includes a plurality of NG-RAN Nodes, specifically gNBs (or ng-eNBs), and is connected to a 5G-compliant core network (hereinafter referred to as 5GC, not shown). The NG-RAN 20 and 5GC may simply be expressed as a "network".

The gNB 100 is a radio base station compliant with NR and performs NR-compliant radio communication with the UE 200. The gNB 100 and UE 200 may perform radio communication via a radio bearer, specifically a Signaling Radio Bearer (SRB) or a DRB Data Radio Bearer (DRB) .

Further, the gNB 100 and the UE 200 can support Massive MIMO generating a beam with higher directivity by controlling radio signals transmitted from a plurality of antenna elements, Carrier aggregation (CA) bundling and using a plurality of Component carriers (CCs), Dual connectivity (DC) simultaneously communicating between the UE and each of the plurality of NG-RAN Nodes, and the like.

In DC (and CA), a master cell group (MCG) and a secondary cell group (SCG) may be configured. The MCG may include a primary cell (PCell) and the SCG may include a secondary cell (SCell).

Further, the SCell may include a primary secondary cell (PSCell). The PSCell is a type of SCell, but may be interpreted as a special SCell that has a function equivalent to that of a PCell. Alternatively, the PSCell may be interpreted as a CC that assures connectivity among CCs supported by the SCell (may be referred to as a secondary radio base station) in DC or Multi-RAT Dual connectivity (MR-DC).

Similar to the PCell, in the PSCell, transmission of a Physical Uplink Control Channel (PUCCH), contention based random access procedures (CBRA), Radio Link Monitoring (downlink radio quality monitoring) function, and the like may be performed.

Further, in the radio communication system 10, control information may be transmitted and received in the downlink (DL) and the uplink. Specifically, Downlink Control Information (DCI) and Uplink control information (UCI) are transmitted and received.

A PUCCH may be interpreted as a UL physical channel used for transmission of the UCI. The UCI may be transmitted by means of either a PUCCH or a PUSCH depending on the situation. The DCI may always be transmitted by means of a Physical Downlink Control Channel (PDCCH) and may not be transmitted via a Physical Downlink Shared Channel (PDSCH).

The UCI may include at least any one of an acknowledgement (ACK)/a negative acknowledgement (NACK) of a Hybrid automatic repeat request (HARQ), a scheduling request (SR) from the UE 200, and Channel State Information (CSI).

Further, if the UE 200 configures an SCG, a UCI reporting procedure (3GPP TS38.213, chapter 9) may be applied to both the MCG and SCG. When the procedure is applied to the SCG, the terms secondary cell (or secondary cells) and serving cell (or serving cells) may mean a secondary cell (not including a PSCell) and a serving cell belonging to an SCG, and PCell may mean the PSCell of an SCG.

Note that the serving cell may be simply interpreted as a cell to which the UE 200 is being connected, but more strictly, in the case of a UE of RRC_CONNECTED for which no CA is configured, only one serving cell is required to constitute the PCell. In the case of a UE of RRC_CONNECTED configured by using CA, the serving cell may be interpreted as representing a set of one or more cells, including a PCell and all PCells.

### (2) Functional block configuration of radio communication system

Next, the functional block configuration of the radio communication system 10 will be described. Specifically, the functional block configurations of the gNB 100 and UE 200 will be described.

### (2.1) gNB 100

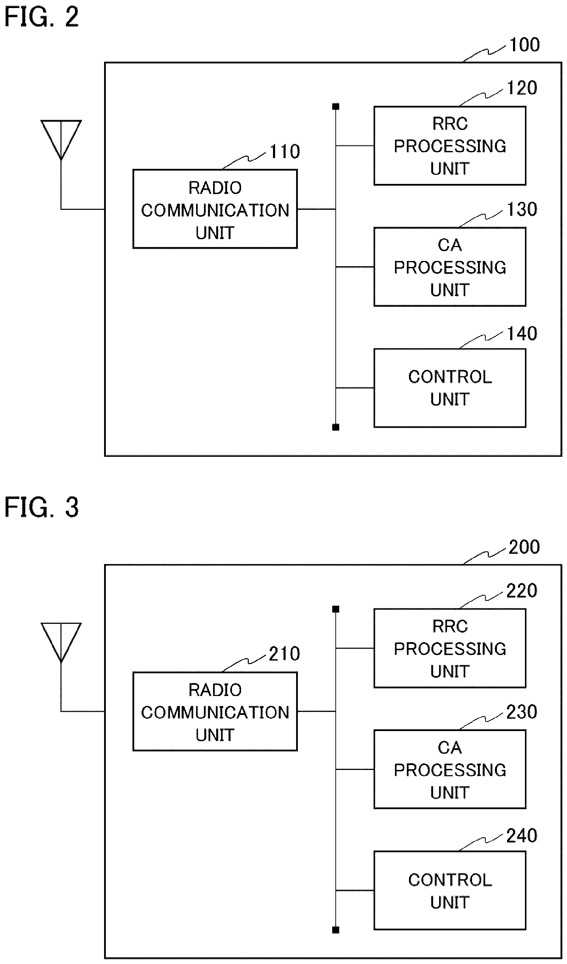

Fig. 2 is a functional block diagram of the gNB 100. As shown in Fig. 2, the gNB 100 includes a radio communication unit 110, an RRC processing unit 120, a CA processing unit 130, and a control unit 140.

The radio communication unit 110 transmits a downlink signal (DL signal) that is compliant with LTE. Further, the radio communication unit 110 receives an uplink signal (UL signal) that is compliant with LTE.

The RRC processing unit 120 performs various processing in the radio resource control layer (RRC). For example, the RRC processing unit 120 can transmit an RRC Reconfiguration to the UE 200. Further, the RRC processing unit 120 can receive, from the UE 200, RRC Reconfiguration Complete, which is a response to the RRC Reconfiguration.

Further, the RRC processing unit 120 can transmit and receive other messages of the RRC layer (RRC Setup Request, RRC Setup, RRC Setup Complete, and the like).

In the present embodiment, the RRC processing unit 120 can transmit configuration information including cell identification information to the UE 200. Specifically, the RRC processing unit 120 can transmit the RRC Reconfiguration including CellGroupConfig to the UE 200.

An information element (IE) of the CellGroupConfig may include: a SCellIndex (secondary cell identifier) that uniquely identifies the SCell in the same cell group, specifically, the SCG; and a servCellIndex (serving cell identifier) that uniquely identifies the serving cell in the same cell group, specifically, the SCG. In the present embodiment, the RRC processing unit 120 may constitute a transmission unit that transmits configuration information including the secondary cell identifier and the serving cell identifier to the UE 200.

The SCellIndex may also be applied to the servCellIndex (serving cell identifier) of the SCell. Specifically, the IE of the servCellIndex is related to a short identifier (ID) used to identify the serving cell (PCell, PSCell, or SCell), a value of 0 is applied to the PCell, and the previously assigned SCellIndex may be applied to the SCell.

Further, the secondary cell identifier and/or serving cell identifier does not necessarily have to be included in the CellGoupConfig and may be included in other IEs.

The CA processing unit 130 performs processing related to carrier aggregation (CA) and dual connectivity (DC).

Specifically, the CA processing unit 130 may perform configuration related to a plurality of component carriers (CCs), cells (PCell/PSCell/SCell), and cell groups in order to support CA (and/or DC).

In particular, in the present embodiment, the CA processing unit 130 can acquire the UCI multiplexed to a PUCCH or a PUSCH when CA (or DC) is performed. As described above, the UCI can be transmitted by means of either a PUCCH or a PUSCH. Further, if the UCI is multiplexed to a PUSCH, the cell of the PUSCH to which the UCI is multiplexed may be determined based on the cell identification information, specifically, the value of the servCellIndex.

The control unit 140 controls each functional block constituting the gNB 100. In particular, in the present embodiment, when CA or DC is performed, the control unit 140 can perform control regarding the configuration of identification information to be assigned to cells.

Specifically, the control unit 140 can determine the value of the secondary cell identifier (SCellIndex) to be assigned to the secondary cell (SCell). The value of the SCellIndex is typically a number such as a natural number, but is not necessarily limited to a number.

Further, the control unit 140 can determine the value of the serving cell identifier (servCellIndex) to be assigned to the serving cell. The value of the servCellIndex is also typically a number such as a natural number, but is not necessarily limited to a number.

When determining the SCellIndex and servCellIndex, the control unit 140 can configure different values for the SCellIndex and the servCellIndex, which is to be assigned to SCGs included in the same cell group (specifically, SCGs).

That is, the control unit 140 determines the value of the servCellIndex and the value of the SCellIndex such that the servCellIndex to be assigned to the PSCell and the SCellIndex to be assigned to the SCell do not overlap in the same cell group (SCG). For example, if the control unit 140 configures 1 for the servCellIndex to be assigned to the PSCell, the control unit 140 may configure a value other than 1 (for example, 2 or greater) for the SCellIndex.

In this way, the control unit 140 may configure the SCellIndex to be assigned to the SCell and the servCellIndex to be assigned to the PSCell, which is a primary cell in a plurality of SCells included in the same cell group, to have different values.

### (2.2) UE 200

Fig. 3 is a functional block diagram of the UE 200. As shown in Fig. 3, the UE 200 includes a radio communication unit 210, an RRC processing unit 220, a CA processing unit 230, and a control unit 240.

The radio communication unit 210 transmits an uplink signal (UL signal) that is compliant with NR. Further, the radio communication unit 210 receives a downlink signal (DL signal) that is compliant with NR. That is, the UE 200 can access the gNB 100 (NG-RAN 20) and can support CA and DC.

The RRC processing unit 220 performs various processing in the radio resource control layer (RRC). Specifically, the RRC processing unit 220 can transmit and receive messages in the radio resource control layer.

The RRC processing unit 220 can receive the RRC Reconfiguration from the network, specifically, from the NG-RAN 20. Further, the RRC processing unit 220 can transmit, to the network, the RRC Reconfiguration Complete, which is a response to the RRC Reconfiguration.

In the present embodiment, the RRC processing unit 220 can receive the RRC Reconfiguration including the CellGroupConfig. As described above, the information element (IE) of the CellGroupConfig may include the SCellIndex (secondary cell identifier) that uniquely identifies the SCell in the same cell group, specifically in the SCG, and the servCellIndex (serving cell identifier) that uniquely identifies the serving cell in the same cell group, specifically in the SCG.

In the present embodiment, the RRC processing unit 220 may constitute a receiving unit that receives the CellGroupConfig (configuration information) that includes the SCellIndex assigned to the SCell and the servCellIndex assigned to the PSCell, which is a PCell in a plurality of SCells included in the same cell group.

The CA processing unit 230 performs processing related to carrier aggregation (CA) and dual connectivity (DC).

Specifically, the CA processing unit 230 may perform configuration related to a plurality of component carriers (CCs), cells (PCell/PSCell/SCell), and cell groups in order to support CA (and/or DC).

In particular, in the present embodiment, the CA processing unit 230 can perform processing of multiplexing the uplink control information (UCI) to a PUCCH or PUSCH. As described above, the UCI can be multiplexed to a PUCCH or PUSCH, but if a plurality of SCells are configured when CA (and/or DC) is performed, the CA processing unit 230 may multiplex the UCI to a PUSCH via any one of the SCells (hereinafter abbreviated as a PUSCH of an SCell as appropriate).

Specifically, the CA processing unit 230 may multiplex the UCI to any one of a plurality of PUSCHs based on control from the control unit 240.

The control unit 240 controls each functional block constituting the UE 200. In particular, in the present embodiment, the control unit 240 can perform control related to transmission of the uplink control information (UCI).

Specifically, when CA (and/or DC) is performed, the control unit 240 can determine, based on the cell identification information, a cell to which the UCI should be multiplexed, specifically, an uplink channel of the cell. More specifically, the control unit 240 can determine the PUSCH of the SCell to which the UCI should be multiplexed, based on the SCellIndex assigned to the SCell and the serving cell, in particular, the servCellIndex assigned to the PSCell.

Here, the control unit 240 may multiplex the UCI to a PUSCH of a serving cell to which a servCellIndex with the smallest value is assigned, but in the above case, the servCellIndex assigned to the PSCell and the SCellIndex assigned to the SCell may overlap.

If the SCellIndex and the servCellIndex overlap in this way, the control unit 240 may multiplex the UCI to the PUSCH transmitted via the PSCell. The overlap between the SCellIndex and the servCellIndex may be interpreted as the case where the same number is assigned when a numerical value such as a natural number is used as described above. Meanwhile, it may be interpreted that the SCellIndex and the servCellIndex overlap even when a part of the SCellIndex is the same as a part of the servCellIndex.

Further, the control unit 240 may more preferentially multiplex the UCI to a PUSCH transmitted via the PSCell than that transmitted via the SCell to which the SCellIndex overlapping with the servCellIndex is assigned. Specifically, if the SCellIndex and the servCellIndex overlap, the control unit 240 may more preferentially use the PUSCH of the PSCell for the multiplexing of the UCI than the PUSCH of the SCell. In this case, the transmission of the UCI by means of the PUSCH of the SCell is not excluded, and a state may be included in which more pieces of UCI are multiplexed to the PUSCH of the PSCell.

### (3) Operation of radio communication system

Next, the operation of the radio communication system 10 will be described. Specifically, a description will be given regarding operations related to the configuration of cell identification information when CA (and/or DC, hereinafter the same) is performed, and multiplexing to a PUSCH of uplink control information (UCI) that is based on the identification information.

### (3.1) Premise

The UCI reporting procedure (3GPP TS38.213, chapter 9) specifies multiplexing UCI to a PUSCH transmitted via a serving cell to which a servCellIndex with the smallest value is assigned.

When CA is performed, that is, when the UE 200 configures an SCG, the SCell may be configured by means of the SCellIndex. Further, the PSCell may be configured by means of the servCellIndex. Specifically, as described above, the servCellIndex may be configured by means of the SpCellConfig included in the IE of the CellGroupConfig, and the SCellIndex may be configured by means of the SCellConfig (see 3GPP TS38.331, chapter 6.3.2).

Further, the SCellIndex assigned to the SCell is also applied to the servCellIndex of the SCell. The IE of the servCellIndex relates to the short identifier (ID) used to identify the serving cell (PCell, PSCell, or SCell), the value of 0 is applied to the PCell, and the previously assigned SCellIndex may be applied to the SCell.

In this case, the following problem arises: if the servCellIndex assigned to the PSCell and the SCellIndex assigned to the SCell overlap, the UE 200 multiplexes the UCI to the PUSCH of the serving cell having the servCellIndex with the smallest value, but the UE 200 is not able to determine whether the UCI should be multiplexed to the PUSCH of the PSCell or the PUSCH of the SCell.

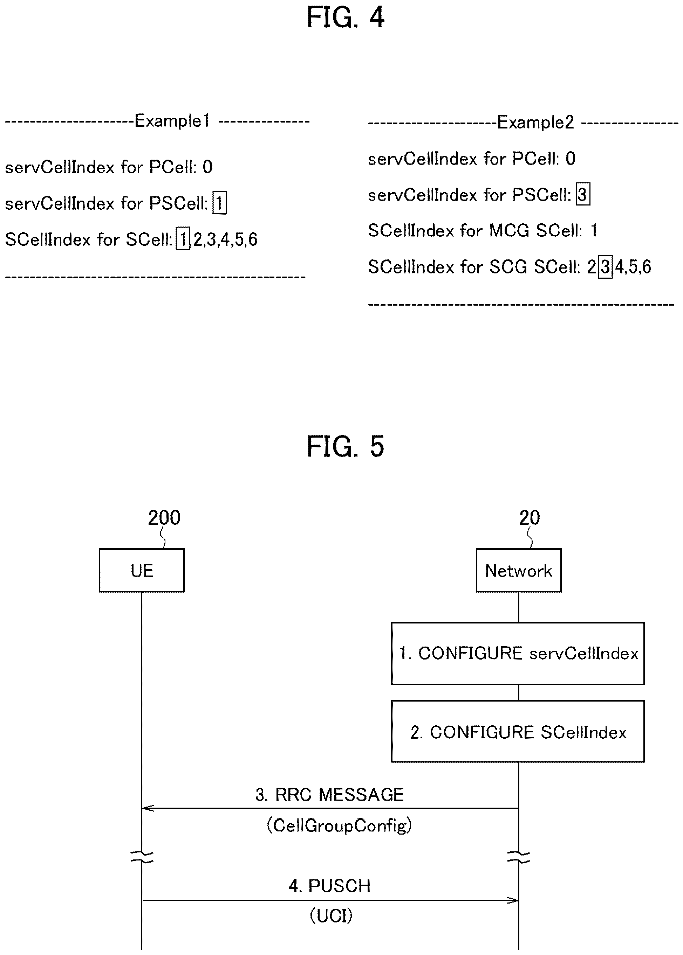

Fig. 4 shows examples where the SCellIndex assigned to the SCell and the servCellIndex assigned to the PSCell overlap.

In Example 1, a servCellIndex (1) for a PSCell overlaps with a SCellIndex (1) for a SCell (framed number parts). There is a possibility that a plurality of SCells are configured, and different SCellIndexes may be assigned to the SCells. In this case, the UE 200 is not able to determine whether the UCI should be multiplexed to the PUSCH of the PSCell or the PUSCH of the SCell of the SCellIndex (1).

In Example 2, a servCellIndex (3) for a PSCell overlaps with a SCellIndex (3) for a SCell (framed number parts). In Example 2, there is no problem if the UCI is multiplexed to a PUSCH of the SCell of the SCellIndex (2), but if a PUSCH transmission of the SCell (PSCell) of the SCellIndex (3) occurs, the UE is not able to determine which PUSCH the UCI should be multiplexed to.

In the following, operation examples that can solve such a problem will be described.

### (3.2) Operation Example 1

In this operation example, a description will be given regarding an operation to avoid overlapping between the servCellIndex assigned to the PSCell and the SCellIndex assigned to the SCell on the network side.

Fig. 5 shows an example of a communication sequence between the UE 200 and the network in Operation Example 1. In the same cell group, the network (gNB 100) assigns, to the servCellIndex assigned to the PSCell, a value (number) different from a value (number) of the SCellIndex assigned to the SCell. That is, the servCellIndex assigned to the PSCell and the SCellIndex assigned to the SCell must not overlap in the same cell group (specifically, SCG).

The servCellIndex for 3GPP TS38.331 may be defined as follows.

"The IE ServCellIndex concerns a short identity, used to identify a serving cell (i.e. the PCell, the PSCell or an SCell). Value 0 applies for the PCell, while the SCellIndex that has previously been assigned applies for SCells. For servCellIndex of PSCell, the value shall be assigned other than SCellIndex used for SCells within SCG."

In this way, in the case of the servCellIndex for the PSCell, a value other than the SCellIndex used for the SCell in the SCG may be assigned.

As shown in Fig. 5, the network configures the servCellIndex assigned to the PSCell (step 1). For example, the network configures "1" for the servCellIndex assigned to the PSCell.

The network then configures the SCellIndex assigned to the SCell (step 2). For example, the network configures "2" for the SCellIndex assigned to the SCell. Note that if there are a plurality of SCells, the same processing may be repeated, but any number other than "1" and "2" is assigned. In addition, the order of operations in steps 1 and 2 may be switched.

The network transmits an RRC message including the configured servCellIndex and SCellIndex to the UE 200 (step 3). Specifically, the network transmits the RRC Reconfiguration including the CellGroupConfig, which may include the configured servCellIndex and SCellIndex.

Based on the values of a servCellIndex (1) and a SCellIndex (2) included in the received CellGroupConfig, the UE 200 selects the PUSCH to which the UCI should be multiplexed and multiplexes the UCI to the selected PUSCH (step 4).

Specifically, the UE 200 may multiplex the UCI to a PUSCH of a serving cell to which a servCellIndex (1) with the smallest value is assigned, specifically the PSCell.

### (3.3) Operation Example 2

In this operation example, a description will be given regarding an operation for the UE 200 to multiplex the UCI to a PUSCH when the servCellIndex assigned to the PSCell and the SCellIndex assigned to the SCell overlap.

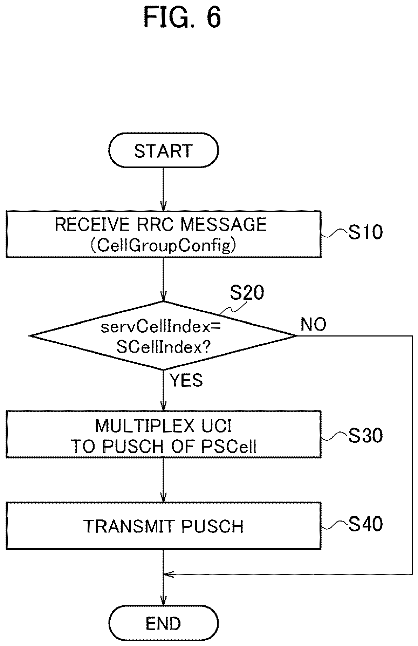

Fig. 6 shows an operation flow for the UE 200 to multiplex the UCI to the PUSCH in Operation Example 2. As described above, the UE 200 can multiplex the UCI to the PUSCH of the cell having the servCellIndex with the smallest value (the smallest servCellIndex cell) in the same cell group.

Here, if the servCellIndex of the PSCell and the servCellIndex (SCellIndex) of the SCell overlap, the UE 200 may multiplex or preferentially multiplex the UCI to the PUSCH of the PSCell.

Specifically, as shown in Fig. 6, the UE 200 receives the RRC Reconfiguration including the CellGroupConfig (step 10). As described above, the CellGroupConfig may include the servCellIndex assigned to the PSCell and the SCellIndex assigned to the SCell.

The UE 200 determines whether the servCellIndex of the PSCell overlaps with the SCellIndex of the SCell (step 20). For example, if "3" is configured for the servCellIndex of the PSCell and "3" is configured for the SCellIndex of any one of SCells (see Example 2 in Fig. 4), the UE 200 may determine that the servCellIndex of the PSCell overlaps with the SCellIndex of the SCell.

When the servCellIndex of the PSCell overlaps with the SCellIndex of the SCell in this way, if a PUSCH transmission of the SCell (PSCell) of the SCellIndex with a value of "3" occurs, which PUSCH the UCI should be multiplexed to becomes an issue, but the UE 200 may determine to multiplex the UCI to the PUSCH of the PSCell (step 30).

The UE 200 transmits the PUSCH of the PSCell to which the UCI is multiplexed (step 40). The UE 200 may multiplex all pieces of UCI to the PUSCH of the PSCell, or may also multiplex the UCI to the PUSCH of the SCell while preferentially using the PUSCH of the PSCell.

### (4) Action and effect

According to the above embodiment, the following action and effect can be obtained. Specifically, the network (gNB 100) can configure the SCellIndex assigned to the SCell and the servCellIndex assigned to the PSCell, which is the primary cell of the plurality of SCells included in the same cell group, to have different values.

Further, the UE 200 may multiplex or preferentially multiplex the UCI to the PUSCH transmitted via the PSCell if the SCellIndex and the servCellIndex overlap.

Therefore, multiplexing of the UCI to the appropriate PUSCH can be achieved within the cell group (SCG). In other words, when multiplexing the UCI to the PUSCH on the cell of the servCellIndex with the smallest value (the smallest servCellIndex cell) when NR CA (and/or DC) is performed, the UE 200 can distinguish between the PSCell and the SCell, and this eliminates the problem that the UE 200 is not able to determine a multiplex destination of the UCI.

### (5) Other embodiments

Although an embodiment has been described above, it is obvious to those skilled in the art that the present disclosure is not limited to the description of the embodiment and that various modifications and improvements thereof are possible.

For example, in the above described embodiment, an example has been described in which the SCellIndex and the servCellIndex are included in the CellGroupConfig, but at least one of the SCellIndex and the servCellIndex may be included in another IE or the like.

Further, in the above description, terms such as configure, activate, update, indicate, enable, specify, and select may be read interchangeably. Similarly, terms such as link, associate, correspond, and map may be read interchangeably, and terms such as allocate, assign, monitor, and map may be read interchangeably.

In addition, terms such as specific, dedicated, UE-specific, and UE-dedicated may be read interchangeably. Similarly, terms such as common, shared, group-common, UE-common, and UE-shared may be read interchangeably.

The block diagram (Figs. 2, 3) used in the description of the above-described embodiment shows blocks in units of functions. Those functional blocks (components) can be realized by a desired combination of at least one of hardware and software. A realization method for each functional block is not particularly limited. That is, each functional block may be realized by using one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that makes a transmitting function work is called a transmitting unit or a transmitter. For any of the above, as described above, the realization method is not particularly limited.

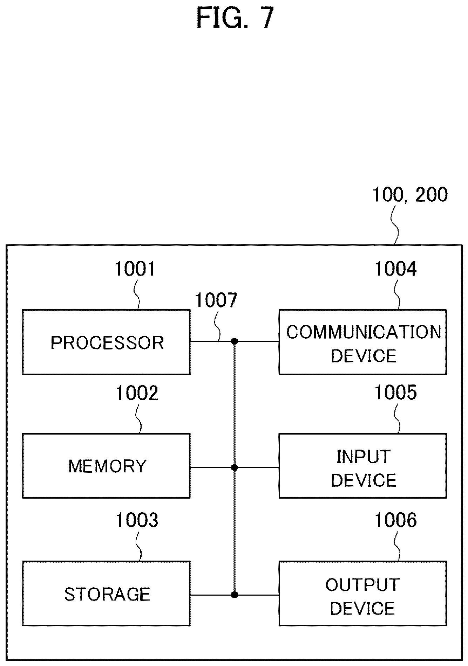

Further, the above-described gNB 100 and UE 200 (the device) may function as a computer that performs processing of a radio communication method of the present disclosure. Fig. 7 is a diagram showing an example of a hardware configuration of the device. As shown in Fig. 7, the device may be configured as a computer device including a processor 1001, a memory 1002, a storage 1003, a communication device 1004, an input device 1005, an output device 1006, a bus 1007, and the like.

Furthermore, in the following description, the term "device" can be substituted with circuit, device, unit, or the like. The hardware configuration of the device may include one or more devices shown in the figure or may not include some of the devices.

Each of the functional blocks of the device (see Figs. 2, 3) is implemented by means of any of hardware elements of the computer device or a combination of the hardware elements.

In addition, each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 operates, for example, an operating system to control the entire computer. The processor 1001 may be configured with a Central Processing Unit (CPU) including interfaces with peripheral devices, control devices, arithmetic devices, registers, and the like.

Moreover, the processor 1001 reads a program (program code), a software module, data, and the like from at least one of the storage 1003 and the communication device 1004 into the memory 1002, and executes various processes according to these. As the program, a program causing the computer to execute at least part of the operation described in the above embodiment is used. Alternatively, various processes described above can be executed by one processor 1001 or can be executed simultaneously or sequentially by two or more processors 1001. The processor 1001 can be implemented by using one or more chips. Alternatively, the program may be transmitted from a network via a telecommunication line.

The memory 1002 is a computer readable recording medium and may be configured, for example, with at least one of a Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), and the like. The memory 1002 may store therein programs (program codes), software modules, and the like that can execute the method according to one embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (registered trademark) disk), a smart card, a flash memory (for example, a card, a stick, a key drive), a floppy (registered trademark) disk, a magnetic strip, and the like. The storage 1003 can be referred to as an auxiliary storage device. The recording medium can be, for example, a database including at least one of the memory 1002 and the storage 1003, a server, or other appropriate medium.

The communication device 1004 is hardware (transmission/reception device) capable of performing communication between computers via at least one of a wired network and a wireless network. The communication device 1004 is also referred to as, for example, a network device, a network controller, a network card, a communication module, and the like.

The communication device 1004 may include a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may have an integrated configuration (for example, a touch screen).

Also, the respective devices such as the processor 1001 and the memory 1002 are connected to each other with the bus 1007 for communicating information. The bus 1007 may be constituted by a single bus or may be constituted by different buses for each device-to-device.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by means of this hardware. For example, the processor 1001 may be implemented by using at least one of the above-described items of hardware.

Further, notification of information is not limited to that in the aspect/embodiment described in the present disclosure, and may be performed by using other methods. For example, notification of information may be performed by physical layer signaling (for example, Downlink Control Information (DCI), Uplink Control Information (UCI)), higher layer signaling (for example, RRC signaling, Medium Access Control (MAC) signaling), broadcast information (Master Information Block (MIB), System Information Block (SIB)), other signals, or a combination thereof. The RRC signaling may also be referred to as an RRC message, for example, or may be an RRC Connection Setup message, an RRC Connection Reconfiguration message, or the like.

Each aspect/embodiment described in the present disclosure can be applied to at least one of Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and a next-generation system that is expanded based on these. Further, a plurality of systems may be combined (for example, a combination of at least one of LTE and LTE-A with 5G) and applied.

The order of the processing procedures, sequences, flowcharts, and the like of each aspect/embodiment described in the present disclosure may be exchanged as long as there is no contradiction. For example, the methods described in the present disclosure present the elements of the various steps by using an exemplary order and are not limited to the presented specific order.

The specific operation that is performed by a base station in the present disclosure may be performed by its upper node in some cases. In a network constituted by one or more network nodes having a base station, it is obvious that the various operations performed for communication with the terminal may be performed by at least one of the base station and other network nodes other than the base station (for example, an MME, an S-GW, and the like may be considered, but there is not limited thereto). In the above, an example in which there is one network node other than the base station is explained; however, a combination of a plurality of other network nodes (for example, an MME and an S-GW) may be used.

Information and signals (information and the like) can be output from a higher layer (or lower layer) to a lower layer (or higher layer). These may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by using a value (0 or 1) represented by one bit, by truth-value (Boolean: true or false), or by comparison of numerical values (for example, comparison with a predetermined value).

Each of the aspects/embodiment described in the present disclosure may be used separately or in combination, or may be switched in accordance with the execution. In addition, notification of predetermined information (for example, notification of "is X") is not limited to being performed explicitly, and it may be performed implicitly (for example, without notifying the predetermined information).

Regardless of being referred to as software, firmware, middleware, microcode, hardware description language, or some other name, software should be interpreted broadly to mean instructions, an instruction set, code, a code segment, program code, a program, a subprogram, a software module, an application, a software application, a software package, a routine, a subroutine, an object, an executable file, an execution thread, a procedure, a function, and the like.

Further, software, instruction, information, and the like may be transmitted and received via a transmission medium. For example, when software is transmitted from a website, a server, or another remote source by using at least one of a wired technology (a coaxial cable, an optical fiber cable, a twisted pair cable, a Digital Subscriber Line (DSL), or the like) and a wireless technology (infrared light, microwave, or the like), then at least one of these wired and wireless technologies is included within the definition of the transmission medium.

Information, signals, or the like described in the present invention may be represented by using any of a variety of different technologies. For example, data, an instruction, a command, information, a signal, a bit, a symbol, a chip, or the like that may be mentioned throughout the above description may be represented by a voltage, a current, an electromagnetic wave, a magnetic field or magnetic particles, an optical field or photons, or a desired combination thereof.

It should be noted that the terms described in the present disclosure and terms necessary for understanding the present disclosure may be replaced with terms having the same or similar meanings. For example, at least one of a channel and a symbol may be a signal (signaling). A signal may also be a message. Further, a Component Carrier (CC) may be referred to as a carrier frequency, a cell, a frequency carrier, or the like.

The terms "system" and "network" used in the present disclosure can be used interchangeably.

Furthermore, information, parameters, and the like described in the present disclosure can be represented by an absolute value, can be represented by a relative value from a predetermined value, or can be represented by corresponding other information. For example, a radio resource can be indicated using an index.

Names used for the above parameters are not restrictive names in any respect. In addition, formulas and the like using these parameters may be different from those explicitly disclosed in the present disclosure. Since the various channels (for example, a PUCCH, a PDCCH, or the like) and information elements can be identified by any suitable names, the various names allocated to these various channels and information elements shall not be restricted in any way.

In the present disclosure, the terms such as "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. A base station may also be referred to with a term such as a macro cell, a small cell, a femtocell, or a pico cell.

A base station can accommodate one or more (for example, three) cells (also referred to as sectors). In a configuration in which a base station accommodates a plurality of cells, the entire coverage area of the base station can be divided into a plurality of smaller areas. In each of the smaller areas, a communication service can be provided by a base station subsystem (for example, a small base station for indoor use (remote radio head: RRH)).

The term "cell" or "sector" refers to a part or all of the coverage area of at least one of a base station and a base station subsystem that performs a communication service in this coverage.

In the present disclosure, the terms such as "mobile station (Mobile Station: MS)", "user terminal", "user equipment (User Equipment: UE)", and "terminal" can be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms by those skilled in the art.

At least one of a base station and a mobile station may be called a transmitting device, a receiving device, a communication device, or the like. Note that at least one of a base station and a mobile station may be a device mounted on a moving body, a moving body itself, or the like. The moving body may be a vehicle (for example, a car, an airplane, or the like), an unmanned moving body (a drone, a self-driving car, or the like), or a robot (manned type or unmanned type). At least one of a base station and a mobile station also includes a device that does not necessarily move during the communication operation. For example, at least one of a base station and a mobile station may be an Internet of Things (IoT) device such as a sensor.

Also, a base station in the present disclosure may be substituted with a mobile station (user terminal, hereinafter the same). For example, each aspect/embodiment of the present disclosure may be applied to a configuration in which communication between a base station and a mobile station is replaced with communication between a plurality of mobile stations (for example, this may be called Device-to-Device (D2D), Vehicle-to-Everything (V2X), or the like). In this case, the mobile station may have the function of a base station. In addition, words such as "uplink" and "downlink" may also be substituted with words corresponding to inter-terminal communication (for example, "side"). For example, an uplink channel, a downlink channel, or the like may be substituted with a side channel (or sidelink) .

Similarly, the mobile station in the present disclosure may be read as a base station. In this case, the base station may have the function of the mobile station. A radio frame may be composed of one or more frames in the time domain. Each of the one or more frames in the time domain may be referred to as a subframe. A subframe may be further composed of one or more slots in the time domain. The subframe may be a fixed time length (for example, 1 ms) independent of the numerology.

The numerology may be a communication parameter applied to at least one of transmission and reception of a certain signal or channel. The numerology may indicate at least one of, for example, subcarrier spacing (SCS), bandwidth, symbol length, cyclic prefix length, transmission time interval (TTI), the number of symbols per TTI, radio frame configuration, a specific filtering process performed by a transceiver in the frequency domain, a specific windowing process performed by a transceiver in the time domain, and the like.

A slot may be composed of one or more symbols (Orthogonal Frequency Division Multiplexing (OFDM)) symbols, Single Carrier Frequency Division Multiple Access (SC-FDMA) symbols, and the like) in the time domain. A slot may be a unit of time based on the numerology.

A slot may include a plurality of minislots. Each minislot may be composed of one or more symbols in the time domain. A minislot may be called a subslot. A minislot may be composed of fewer symbols than slots. A PDSCH (or PUSCH) transmitted in time units greater than the minislot may be referred to as a PDSCH (or PUSCH) mapping type A. A PDSCH (or PUSCH) transmitted using a minislot may be referred to as a PDSCH (or PUSCH) mapping type B.

Each of a radio frame, subframe, slot, minislot, and symbol represents a time unit for transmitting a signal. A radio frame, subframe, slot, minislot, and symbol may have respectively different names corresponding to them.

For example, one subframe may be called a transmission time interval (TTI), a plurality of consecutive subframes may be called a TTI, and one slot or one minislot may be called a TTI. That is, at least one of the subframe and TTI may be a subframe (1 ms) in the existing LTE, a period shorter than 1 ms (for example, 1-13 symbols), or a period longer than 1 ms. Note that, a unit representing TTI may be called a slot, a minislot, or the like instead of a subframe.

Here, a TTI refers to the minimum time unit of scheduling in radio communication, for example. For example, in the LTE system, the base station performs scheduling for allocating radio resources (frequency bandwidth, transmission power, and the like that can be used in each user terminal) to each user terminal in units of TTI. The definition of TTI is not limited to this.

A TTI may be a transmission time unit such as a channel-encoded data packet (transport block), a code block, or a code word, or may be a processing unit such as scheduling or link adaptation. When a TTI is given, a time interval (for example, the number of symbols) in which a transport block, a code block, a code word, and the like are actually mapped may be shorter than TTI.

When one slot or one minislot is called a TTI, one or more TTIs (that is, one or more slots or one or more minislots) may be the minimum time unit of the scheduling. The number of slots (minislot number) constituting the minimum time unit of the scheduling may be controlled.

A TTI having a time length of 1 ms may be referred to as an ordinary TTI (TTI in LTE Rel. 8-12), a normal TTI, a long TTI, an ordinary subframe, a normal subframe, a long subframe, a slot, and the like. A TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, and the like) may be read as a TTI having a time length exceeding 1 ms, and a short TTI (for example, shortened TTI) may be read as a TTI having a TTI length of less than a TTI length of a long TTI and a TTI length of 1 ms or more.

A resource block (RB) is a resource allocation unit in the time domain and the frequency domain, and may include one or more consecutive subcarriers in the frequency domain. The number of subcarriers included in the RB may be the same regardless of the numerology, and may be 12, for example. The number of subcarriers included in the RB may be determined based on the numerology.

Further, the time domain of an RB may include one or more symbols, and may have a length of 1 slot, 1 minislot, 1 subframe, or 1 TTI. Each TTI, subframe, or the like may be composed of one or more resource blocks.

Note that, one or more RBs may be called a physical resource block (PRB), a sub-carrier group (SCG), a resource element group (REG), a PRB pair, a RB pair, and the like.

A resource block may be configured by one or more resource elements (REs). For example, one RE may be a radio resource domain of one subcarrier and one symbol.

A bandwidth part (BWP) (which may be called a partial bandwidth or the like) may represent a subset of consecutive common resource blocks (RBs) for a certain numerology in a certain carrier. Here, the common RB may be specified by an index of the RB based on the common reference point of the carrier. A PRB may be defined in a certain BWP and numbered within that BWP.

A BWP may include a BWP for UL (UL BWP) and a BWP for DL (DL BWP). One or more BWPs may be set in one carrier for the UE.

At least one of the configured BWPs may be active, and the UE does not have to expect to transmit and receive predetermined signals/channels outside the active BWP. Note that "cell", "carrier", and the like in this disclosure may be read as "BWP".

The above-described structures such as a radio frame, a subframe, a slot, a minislot, and a symbol are merely examples. For example, structures such as the number of subframes included in a radio frame, the number of slots per subframe or radio frame, the number of minislots included in a slot, the number of symbols and RBs included in a slot or minislot, the number of subcarriers included in RBs, and the number of symbols included in a TTI, a symbol length, the cyclic prefix (CP) length, and the like can be changed in various manner.

The terms "connected", "coupled", or any variations thereof mean any direct or indirect connection or coupling between two or more elements, and can include that one or more intermediate elements are present between two elements that are "connected" or "coupled" to each other. The coupling or connection between the elements may be physical, logical, or a combination thereof. For example, "connection" may be substituted with "access". In the present disclosure, two elements can be "connected" or "coupled" to each other by using at least one of one or more wires, one or more cables, and one or more printed electrical connections, and as some non-limiting and non-exhaustive examples, by using electromagnetic energy having wavelengths in the radio frequency domain, a microwave region, and a light (both visible and invisible) region, and the like.

A reference signal may be abbreviated as RS and may be called a pilot according to applicable standards.

As used in the present disclosure, the phrase "based on" does not mean "based only on" unless explicitly stated otherwise. In other words, the phrase "based on" means both "based only on" and "based at least on".

"Means" in the configuration of each device above may be replaced with "unit", "circuit", "device", and the like.

Any reference to elements using a designation such as "first", "second", or the like used in the present disclosure generally does not limit the amount or order of those elements. Such designations can be used in the present disclosure as a convenient method to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive-OR.

Throughout the present disclosure, for example, during translation, if articles such as a, an, and the in English are added, the present disclosure may include that a noun following these articles is used in plural.

As used in this disclosure, the term "determining" may encompass a wide variety of actions. "determining" includes deeming that determining has been performed by, for example, judging, calculating, computing, processing, deriving, investigating, searching (looking up, search, inquiry) (for example, searching in a table, database, or another data structure), ascertaining, and the like. In addition, "determining" can include deeming that determining has been performed by receiving (for example, receiving information), transmitting (for example, transmitting information), inputting (input), outputting (output), access (accessing) (for example, accessing data in a memory), and the like. In addition, "determining" can include deeming that determining has been performed by resolving, selecting, choosing, establishing, comparing, and the like. That is, "determining" may include deeming that "determining" regarding some action has been performed. Moreover, "determining" may be read as "assuming", "expecting", "considering", and the like.

In the present disclosure, the wording "A and B are different" may mean "A and B are different from each other". It should be noted that the wording may mean "A and B are each different from C". Terms such as "separate", "couple", or the like may also be interpreted in the same manner as "different".

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

10 radio communication system
20 NG RAN
100 gNB
110 radio communication unit
120 RRC processing unit
130 CA processing unit
140 control unit
200 UE
210 radio communication unit
220 RRC processing unit
230 CA processing unit
240 control unit
1001 processor
1002 memory
1003 storage
1004 communication device
1005 input device
1006 output device
1007 bus

## Claims

1. A radio base station comprising:
a control unit that configures different values for a secondary cell identifier assigned to a secondary cell, and a serving cell identifier assigned to a primary secondary cell, the primary secondary cell being a primary cell in a plurality of the secondary cells included in the same cell group; and
a transmission unit that transmits configuration information including the secondary cell identifier and the serving cell identifier to a terminal.

2. The radio base station according to claim 1, wherein
the secondary cell identifier is also applied to a serving cell identifier of the secondary cell.

3. A terminal comprising:
a receiving unit that receives configuration information including a secondary cell identifier assigned to a secondary cell, and a serving cell identifier assigned to a primary secondary cell, the primary secondary cell being a primary cell in a plurality of the secondary cells included in the same cell group; and
a control unit that multiplexes uplink control information to a physical uplink shared channel transmitted via the primary secondary cell, if the secondary cell identifier and the serving cell identifier overlap.

4. The terminal according to claim 3, wherein
the control unit more preferentially multiplexes the uplink control information to the physical uplink shared channel transmitted via the primary secondary cell, than the secondary cell to which the secondary cell identifier overlapping with the serving cell identifier is assigned.
